# EUROPEAN PATENT SPECIFICATION

(11) **EP 2 410 807 B1**
(45) Date of publication and mention of the grant of the patent: **20.02.2013**
(21) Application number: 10791979.7
(22) Date of filing: 10.06.2010
(51) Int. Cl.: H04W 72/12, H04B 7/212, H04W 16/26, H04B 7/26

(54) **MOBILE COMMUNICATION METHOD, WIRELESS BASE STATION, AND RELAY NODE**
MOBILKOMMUNIKATIONSVERFAHREN, DRAHTLOSE BASISSTATION UND RELAISKNOTEN DAFÜR
PROCÉDÉ DE COMMUNICATION MOBILE, STATION DE BASE SANS FIL ET NOEUD RELAIS.

(30) Priority: 22.06.2009 JP 2009148133
(43) Date of publication of application: 25.01.2012
(73) Proprietor: NTT DOCOMO, INC., Chiyoda-ku Tokyo (JP)
(72) Inventor: TAKAHASHI, Hideaki, Tokyo 100-6150 (JP); HAPSARI, Wuri Andarmawanti, Tokyo 100-6150 (JP); UMESH, Anil, Tokyo 100-6150 (JP); IWAMURA, Mikio, Tokyo 100-6150 (JP); ISHII, Minami, Tokyo 100-6150 (JP)
(74) Representative: HOFFMANN EITLE
(86) International application number: PCT/JP2010/059862
(87) International publication number: WO 2010/150661

(56) References cited:
- WO-A1-2008/108559
- JP-A- 2008 048 203
- JP-A- 2008 060 868
- COILER, III: 'Delay Analysis for "Type 1" Relay' 3GPP TSG-RAN WG2 #66 R2-093243, [Online] May 2009, Retrieved from the Internet: <URL:http://ftp.3gpp.org/ftp/tsg_ ran/WG2 RL2/TSGR2 66/docs/R2-093243.zip> [retrieved on 2010-08-19]
- NTT DOCOMO: 'Relay Requirements & Use Case Study in LTE-Advanced' 3GPP TSG-RAN2 #66 R2-093281, [Online] May 2009, XP050340953 Retrieved from the Internet: <URL:http://ftp. 3gpp.org/ftp/tsg_ran/WG2_RL2/TSGR2_66/docs/ R2-093281.zip> [retrieved on 2010-08-19]
- 3GPP TS 36.300 V8.8.0, [Online] March 2009, pages 87 - 89 Retrieved from the Internet: <URL:http://www.3gpp.org/ftp/ Specs/archive/36_series/36.300/36300-880.zi p> [retrieved on 2010-08-19]

## Description

### TECHNICAL FIELD

The present invention relates to a mobile communication method, a radio base station, and a relay node.

### BACKGROUND ART

In a mobile communication system employing the LTE (Long Term Evolution)-Advanced scheme which is the next generation of the LTE scheme, a "relay node RN" having the same function as that of a radio base station DeNB (Donor eNB) may be connected between a mobile station UE and the radio base station DeNB.

In the LTE-Advanced mobile communication system, an E-RAB (E-UTRAN Radio Access Bearer) is configured to be set between the mobile station UE and a core node CN, a Uu radio bearer is configured to be set between the mobile station UE and the relay node RN, a Un radio bearer is configured to be set between the relay node RN and the radio base station DeNB, and an S1 bearer is configured to be set between the radio base station DeNB and the core node CN.

EP 1 890 509 A2 discloses that in a radio communication system such as one complying with TEEE802. 16j, a relay station is provided with a control unit to control a transmission processing device and a reception processing device to eliminate overlap between a receiving period of radio signals from a base station and a transmission period of radio signals to a radio terminal. The transmission processing device and reception processing device are further controlled to avoid overlap between a transmission period of radio signals to the base station and a reception period of signals from the radio terminal.

### SUMMARY OF THE INVENTION

### PROBLEMS TO BE SOLVED BY THE INVENTION

However, in the mobile communication system, when a process (reception process in the Un radio bearer) of receiving downlink signals from the radio base station DeNB by the relay node RN is simultaneously performed with a process (transmission process in the Uu radio bearer) of transmitting downlink signals to the mobile station UE by the relay node RN, or when a process (reception process in the Uu radio bearer) of receiving uplink signals from the mobile station UE by the relay node RN is simultaneously performed with a process (transmission processing in the Un radio bearer) of transmitting uplink signals to the radio base station DeNB by the relay node RN, transmission signals of the relay node RN are turned to its own receiver, resulting in the occurrence of interference.

Therefore, the present invention has been achieved in view of the above-described problems, and an object thereof is to provide a mobile communication method capable of reducing interference to a receiver of a relay node itself, which occurs when transmission/reception process in a Un radio bearer and transmission/reception process in a Uu radio bearer are simultaneously performed, a radio base station, and a relay node.

### MEANS FOR SOLVING THE PROBLEM

A first aspect of the present invention is a mobile communication method as set out in Claim 1.

A second aspect of the present invention is a mobile communication method as set out in Claim 3.

A third aspect of the present invention is a radio base station as set out in Claim 5.

A fourth aspect of the present invention is a radio base station as set out in Claim 7.

A fifth aspect of the present invention is a relay node as set out in Claim 9.

A sixth aspect of the present invention is a relay node as set out in Claim 12.

### EFFECT OF THE INVENTION

According to embodiments of the present invention, it is possible to provide a mobile communication method capable of reducing interference to a receiver of a relay node itself, which occurs when transmission/reception process in a Un radio bearer and transmission/reception process in a Uu radio bearer are simultaneously performed, a radio base station, and a relay node.

### BRIEF DESCRIPTION OF THE DRAWINGS

[Fig. 1] Fig. 1 is a diagram illustrating the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram illustrating an example of a format of an "RRC Connection Request" in a mobile communication system according to the first embodiment of the present invention.
[Fig. 4] Fig. 4 is a diagram illustrating an example of a format of an "RRC Connection Reconfiguration" in a mobile communication system according to the first embodiment of the present invention.
[Fig. 5] Fig. 5 is a diagram explaining an example of a method for notifying a subframe pattern in a mobile communication system according to the first embodiment of the present invention.
[Fig. 6] Fig. 6 is a functional block diagram of a relay node according to the first embodiment of the present invention.
[Fig. 7] Fig. 7 is a sequence diagram illustrating an operation of a mobile communication system according to the first embodiment of the present invention.
[Fig. 8] Fig. 8 is a sequence diagram illustrating an operation of a mobile communication system according to a first modification of the first embodiment of the present invention.
[Fig. 9] Fig. 9 is a functional block diagram of a relay node according to a second embodiment of the present invention.
[Fig. 10] Fig. 10 is a diagram illustrating an example of a format of "RRC RN (UE) Capability Information" in a mobile communication system according to the second embodiment of the present invention.
[Fig. 11] Fig. 11 is a functional block diagram of a radio base station according to the second embodiment of the present invention.
[Fig. 12] Fig. 12 is a sequence diagram illustrating an operation of a mobile communication system according to the second embodiment of the present invention.
[Fig. 13] Fig. 13 is a sequence diagram illustrating an operation of a mobile communication system according to the first modification of the second embodiment of the present invention.

### BEST MODES FOR CARRYING OUT THE INVENTION

### (Configuration of mobile communication system according to first embodiment of the present invention)

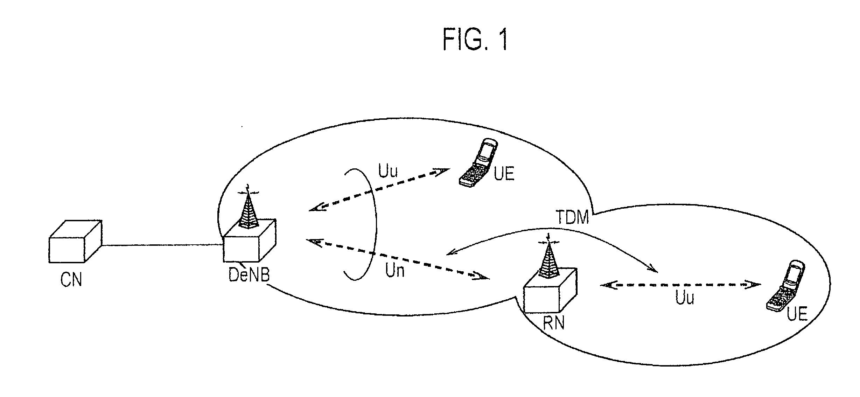

With reference to Fig. 1 through Fig. 6, the configuration of a mobile communication system according to a first embodiment of the present invention will be explained.

As illustrated in Fig. 1, the mobile communication system according to the present embodiment is the LTE-Advanced mobile communication system, and includes a core node (e.g., a gateway device S-GW, a mobile switching center MME and the like) in a core network node, a radio base station DeNB, a relay node RN and the like.

Here, in the example of Fig. 1, a Uu radio bearer has been set between the radio base station DeNB and the mobile station UE, a Un radio bearer has been set between the radio base station DeNB and the relay node RN, and the Uu radio bearer has been set between the relay node RN and the mobile station UE.

Further, it is assumed that SFN (System Frame Number) synchronization has been made between the radio base station DeNB and the relay node RN. That is, the relay node RN is configured to make synchronization for the radio base station DeNB at an SFN level based on SFN included in broadcast information transmitted by the radio base station DeNB.

Further, when the SFN synchronization has not been made between the radio base station DeNB and the relay node RN, the radio base station DeNB is configured to detect the number of frames by which SFN of a radio frame transmitted by the radio base station DeNB and SFN of a radio frame transmitted by the relay node RN are shifted from each other at a same time.

Further, the radio base station DeNB and the relay node RN are configured to transmit uplink signals and downlink signals using a time division multiplexing scheme.

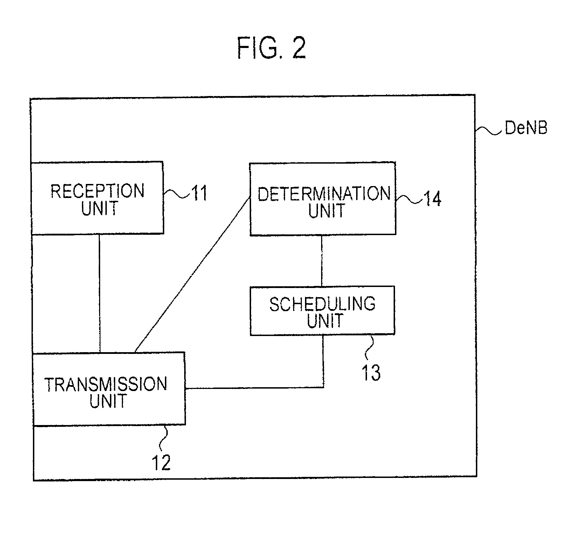

As illustrated in Fig. 2, the radio base station DeNB includes a reception unit 11, a transmission unit 12, a scheduling unit 13, and a determination unit 14.

The reception unit 11 is configured to receive uplink signals transmitted from the relay node RN via the Un radio bearer, uplink signals transmitted from the mobile station UE via the Uu radio bearer, and downlink signals transmitted from the core node CN.

For example, the reception unit 11 is configured to receive an "RRC Connection Request" and the like, which are transmitted from the relay node RN, in a set-up procedure of an RRC connection between the radio base station DeNB and the relay node RN.

The transmission unit 12 is configured to transmit downlink signals to the relay node RN via the Un radio bearer, downlink signals to the mobile station UE via the Uu radio bearer, and uplink signals to the core node CN.

Further, when setting the RRC connection between the radio base station DeNB and the relay node RN, the transmission unit 12 is configured to notify, to the relay node RN, a transmission timing (a predetermined timing) of an MBSFN (Multicast Broadcast Single Frequency Network) subframe.

Here, the MBSFN subframe is a subframe used for MBSFN communication. In addition, in the present specification, the MBSFN subframe also includes an MBSFN subframe which is called "Blank subframe" in the 3GPP meeting and is defined such that an OFDM symbol for a control signal is not transmitted.

Further, when a transmission source of the "RRC Connection Request" received in the reception unit 11 is the relay node RN, the transmission unit 12 may be configured to notify, to the relay node RN, the transmission timing of the MBSFN subframe.

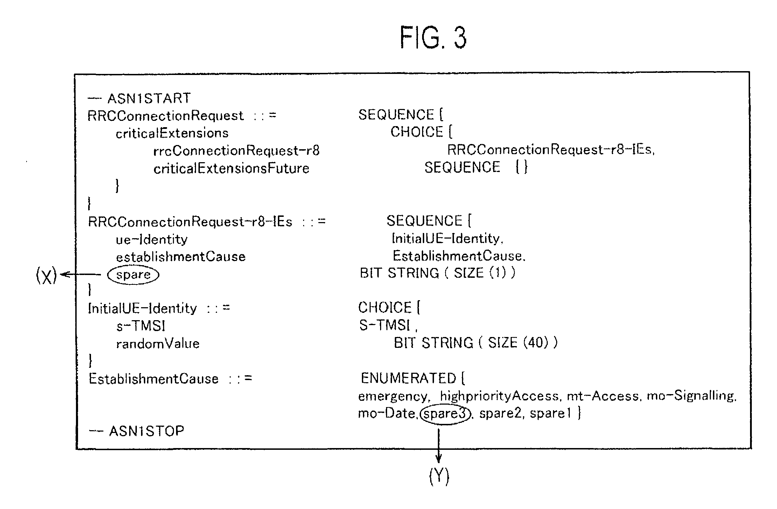

Fig. 3 illustrates an example of a format of an existing "RRC Connection Request".

For example, a bit (a flag) indicating the "relay node RN" or the "mobile station UE" may be provided in a "spare"(X) of an information element "RRCConnectionRequest-r8" of the "RRC Connection Request".

Also, a bit (a flag) indicating the "relay node RN" or the "mobile station UE" may be provided in a "spare3" (Y) and the like of an information element "EstablishmentCause" of the "RRC Connection Request".

Here, when a flag provided in the existing "RRC Connection Request" indicates the "relay node RN", the transmission unit 12 may be configured to determine that the transmission source of the "RRC Connection Request" received in the reception unit 11 is the relay node RN.

Further, the transmission unit 12 may be configured to notify the relay node RN of the transmission timing of the MBSFN subframe by an "RRC Connection Reconfiguration" transmitted in an existing set-up procedure of the RRC connection.

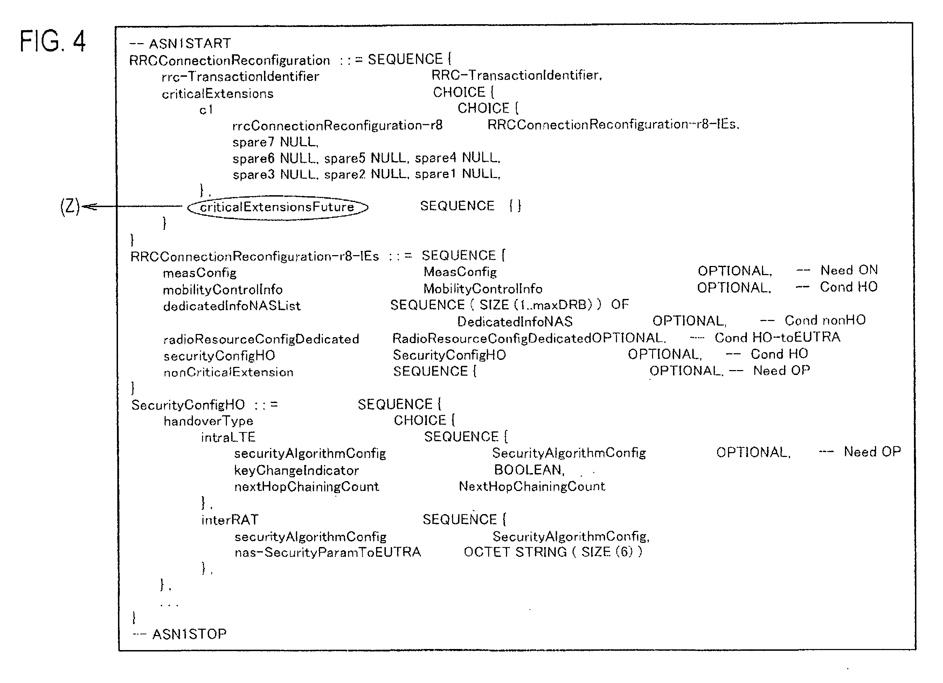

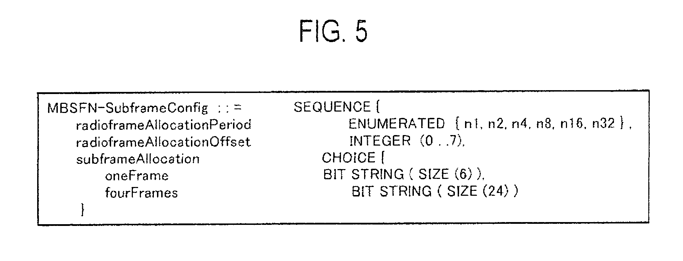

For example, as illustrated in Fig. 4, the transmission unit 12 may set an "MBSFN subframe allocation pattern (see Fig. 5)", which indicates the transmission timing of the MBSFN subframe, in a "criticalExtensionsFuture"(Z) of an information element "criticalExtensions" of the "RRC Connection Reconfiguration".

The determination unit 14 is configured to determine the transmission timing of the MBSFN subframe to be notified to the relay node RN.

For example, the determination unit 14 may be configured to determine the transmission timing of the MBSFN subframe to be notified to the relay node RN, in consideration of the number of relay nodes RNs and mobile stations UEs connected to the radio base station DeNB, and a traffic amount.

The scheduling unit 13 is configured to perform scheduling related to the relay node RN and the mobile station UE connected to the radio base station DeNB.

Specifically, the scheduling unit 13 may be configured to perform scheduling such that the radio base station DeNB transmits downlink signals to the relay node RN at the transmission timing of the MBSFN subframe.

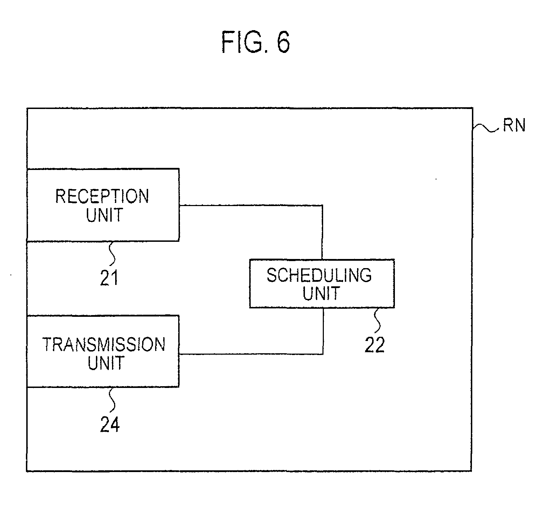

As illustrated in Fig. 6, the relay node RN includes a reception unit 21, a scheduling unit 22, and a transmission unit 24.

The reception unit 11 is configured to receive downlink signals transmitted from the radio base station DeNB via the Un radio bearer, and uplink signals transmitted from the mobile station UE via the Uu radio bearer.

For example, when setting an RRC connection between the relay node RN and the radio base station DeNB, the reception unit 21 is configured to acquire the transmission timing of the MBSFN subframe from the radio base station DeNB.

For example, the reception unit 21 may be configured to acquire the transmission timing of the MBSFN subframe from the "RRC Connection Reconfiguration" transmitted in the existing set-up procedure of the RRC connection.

The scheduling unit 22 is configured to perform scheduling related to the mobile station UE connected to the relay node RN.

Specifically, the scheduling unit 22 is configured to perform scheduling such that the relay node RN transmits downlink signals at a timing other than the transmission timing of the MBSFN subframe.

The transmission unit 24 is configured to transmit uplink signals to the radio base station DeNB via the Un radio bearer, and to transmit downlink signals to the mobile station UE via the Uu radio bearer.

Further, the transmission unit 24 is configured to transmit an "RRC Connection Request" including information, which indicates that the uplink signals have been transmitted to the radio base station DeNB by the relay node RN, in the set-up procedure of the RRC connection.

### (Operation of mobile communication system according to first embodiment of the present invention)

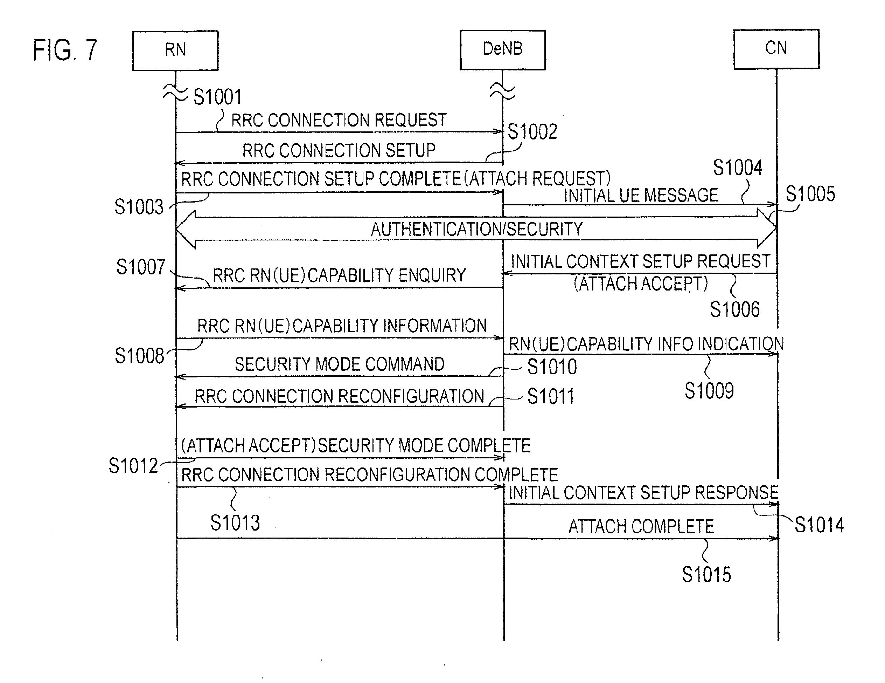

With reference to Fig. 7, the operation of the mobile communication system according to the first embodiment of the present invention will be explained.

As illustrated in Fig. 7, in step S1001, the relay node RN transmits an "RRC Connection Request" to the radio base station DeNB when it starts to operate.

In step S1002, the radio base station DeNB determines that the "RRC connection Request" has been transmitted from the relay node RN based on a flag set in the "RRC Connection Request", and transmits an "RRC Connection Setup" to the relay node RN.

In step S1003, the relay node RN transmits an "RRC Connection Setup Complete" including an "Attach Request" to the radio base station DeNB.

In step S1004, the radio base station DeNB transmits an "Initial UE Message" including the "Attach Request" to the core node CN.

After an "Authentication/Security process" is completed between the relay node RN and the core node CN in step S1005, the core node CN transmits an "Initial Context Setup Request" including an "Attach Accept" to the radio base station DeNB in step S1006.

In step S1007, the radio base station DeNB transmits an "RRC RN (UE) Capability Enquiry" to the relay node RN.

In step S1008, the relay node RN transmits "RRC RN (UE) Capability Information" to the radio base station DeNB.

In step S1009, the radio base station DeNB transmits a "(UE) Capability Info Indication" to the core node CN.

The radio base station DeNB transmits a "Security Mode Command" to the relay node RN in step S1010, and transmits an "RRC Connection Reconfiguration" including the "Attach Accept" to the relay node RN in step S1011.

Here, the radio base station DeNB notifies, to the relay node RN, the transmission timing of the above-mentioned MBSFN subframe by the "RRC Connection Reconfiguration".

The relay node RN transmits a "Security Mode Complete" to the radio base station DeNB in step S1012, and transmits an "RRC Connection Reconfiguration Complete" to the radio base station DeNB in step S1013.

In step S1014, the radio base station DeNB transmits an "Initial Context Setup Response" to the core node CN.

In step S1015, the relay node RN transmits an "Attach Complete" to the core node CN.

### (Operation and Effect of mobile communication system according to first embodiment of the present invention)

In accordance with the mobile communication system according to the first embodiment of the present invention, it is possible to control a resource in the relay node RN, in consideration of the number of relay nodes RNs and mobile stations UEs connected to the radio base station DeNB, and a traffic amount.

### (First modification)

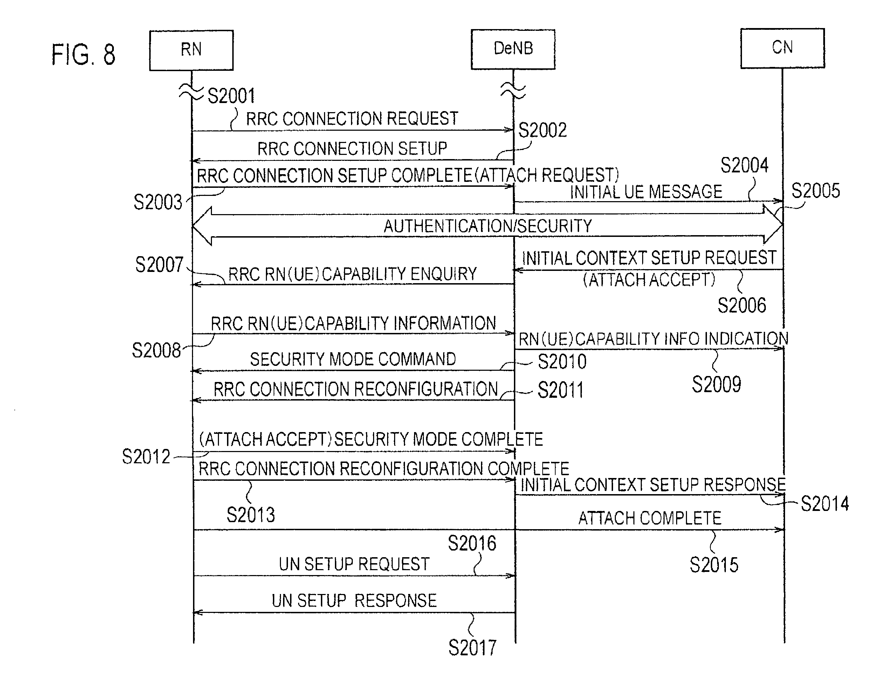

With reference to Fig. 8, the mobile communication system according to the first modification of the first embodiment of the present invention will be explained. Hereinafter, the mobile communication system according to the present first modification will be explained while focusing on the difference from the mobile communication system according to the above-mentioned first embodiment of the present invention.

In the mobile communication system according to the present first modification, the transmission unit 12 of the radio base station DeNB may be configured to notify, to the relay node RN, the transmission timing of the MBSFN subframe by a "Un Setup Response" instead of the "RRC Connection Reconfiguration".

In addition, the "Un Setup Response" has not been defined in the existing set-up procedure of the RRC connection, and is a signal used for a procedure newly defined between the radio base station DeNB and the relay node RN.

Further, the reception unit 21 of the relay node RN may be configured to acquire the transmission timing of the MBSFN subframe from the above-mentioned "Un Setup Response".

With reference to Fig. 8, the operation of the mobile communication system according to the present first modification will be explained below.

As illustrated in Fig. 8, operations in step S2001 through step S2015 are the same as those in step S1001 through step S1015 illustrated in Fig. 7. However, in step S2011, the radio base station DeNB does not notify, to the relay node RN, the transmission timing of the above-mentioned MBSFN subframe by the "RRC Connection Reconfiguration".

In step S2016, the relay node RN transmits a "Un Setup Request", which requests that a Un radio bearer allowing the relay node RN to operate as a radio relay base station should be set between the relay node RN and the radio base station DeNB, to the radio base station DeNB.

In step S2017, the radio base station DeNB transmits a "Un Setup Response" to the relay node RN.

Here, the radio base station DeNB notifies, to the relay node RN, the transmission timing of the above-mentioned MBSFN subframe by the "Un Setup Response".

The above-mentioned aspects of the embodiment may be expressed as follows:

A first aspect of the present embodiment is summarizes as a mobile communication method including the steps of: (A) notifying, from a radio base station DeNB to a relay node RN, a transmission timing of the MBSFN subframe (a predetermined timing), when setting an RRC connection (a connection) between the radio base station and the relay node; (B) scheduling, at the radio base station DeNB, to transmit a downlink signal to the relay node RN at the transmission timing of the MBSFN subframe; and (C) scheduling, at the relay node RN, to transmit a downlink signal at a timing other than the transmission timing of the MBSFN subframe.

In the first aspect of the present embodiment, in the step (A), the radio base station DeNB can notify, to the relay node RN, the transmission timing of the MBSFN subframe by an "RRC Connection Reconfiguration" transmitted in a set-up procedure of the RRC connection.

A second aspect of the present embodiment is summarized as a radio base station DeNB including: a transmission unit 12 configured to notify, to a relay node RN, a transmission timing of the MBSFN subframe, when setting an RRC connection between the radio base station DeNB and the relay node RN; and a scheduling unit 13 configured to schedule the radio base station DeNB to transmit a downlink signal to the relay node RN at the transmission timing of the MBSFN subframe.

In the second aspect of the present embodiment, the radio base station DeNB can further include a reception unit 11 configured to receive an "RRC Connection Request" transmitted in a set-up procedure of the RRC connection, wherein when a transmission source of the "RRC Connection Request" received in the reception unit 11 is the relay node RN in the set-up procedure of the RRC connection, the transmission unit 12 can be configured to notify, to the relay node RN, the transmission timing of the MBSFN subframe by an "RRC Connection Reconfiguration".

A third aspect of the present embodiment is summarizes as a relay node RN including: an reception unit 21 configured to acquire a transmission timing of the MBSFN subframe from a radio base station DeNB, when setting an RRC connection between the relay node EN and the radio base station DeNB; and a scheduling unit 22 configured to schedule the relay node RN to transmit a downlink signal at a timing other than the transmission timing of the MBSFN subframe.

In the third aspect of the present embodiment, the reception unit 21 can be configured to acquire the transmission timing of the MBSFN subframe from an "RRC Connection Reconfiguration" transmitted in a set-up procedure of the RRC connection.

In the third aspect of the present embodiment, the relay node RN can include a transmission unit 24 configured to transmit an "RRC Connection Request" including information indicating being transmitted by the relay node RN, in the set-up procedure of the RRC connection.

### (Mobile communication system according to second embodiment of the present invention)

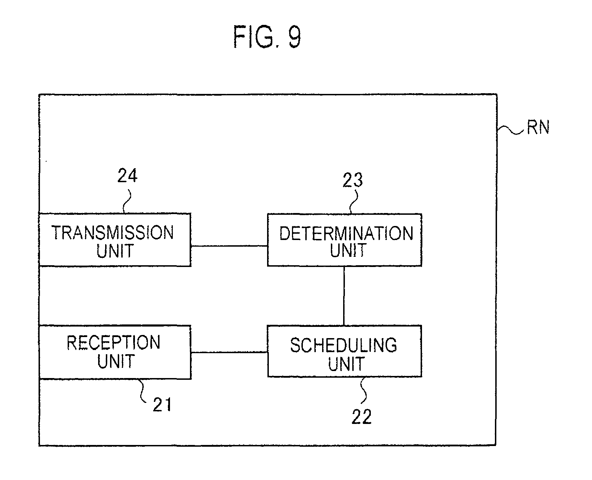

With reference to Fig. 9 through Fig. 12, a mobile communication system according to a second embodiment of the present invention will be explained. Hereinafter, the mobile communication system according to the second embodiment of the present invention will be explained while focusing on the difference from the mobile communication system according to the above-mentioned first embodiment of the present invention.

In the mobile communication system according to the second embodiment of the present invention, the relay node RN is configured to determine the transmission timing of the above-mentioned MBSFN subframe, instead of the radio base station DeNB.

As illustrated in Fig. 9, the relay node RN includes a reception unit 21, a scheduling unit 22, a determination unit 23, and a transmission unit 24.

The determination unit 23 is configured to determine the transmission timing of the above-mentioned MBSFN subframe.

For example, the determination unit 23 may use a timing stored in advance in the relay node RN as station data as the transmission timing of the above-mentioned MBSFN subframe, or use a timing acquired from an OAM (Operation & Maintenance) server as the transmission timing of the above-mentioned MBSFN subframe.

When setting an RRC connection between the relay node RN and the radio base station DeNB, the transmission unit 24 is configured to notifym to the radio base station DeNB, the transmission timing of the MBSFN subframe.

Specifically, the transmission unit 24 may be configured to notify, to the relay node RN, the transmission timing of the MBSFN subframe by the "RRC RN (UE) Capability Information" transmitted in the existing set-up procedure of the RRC connection.

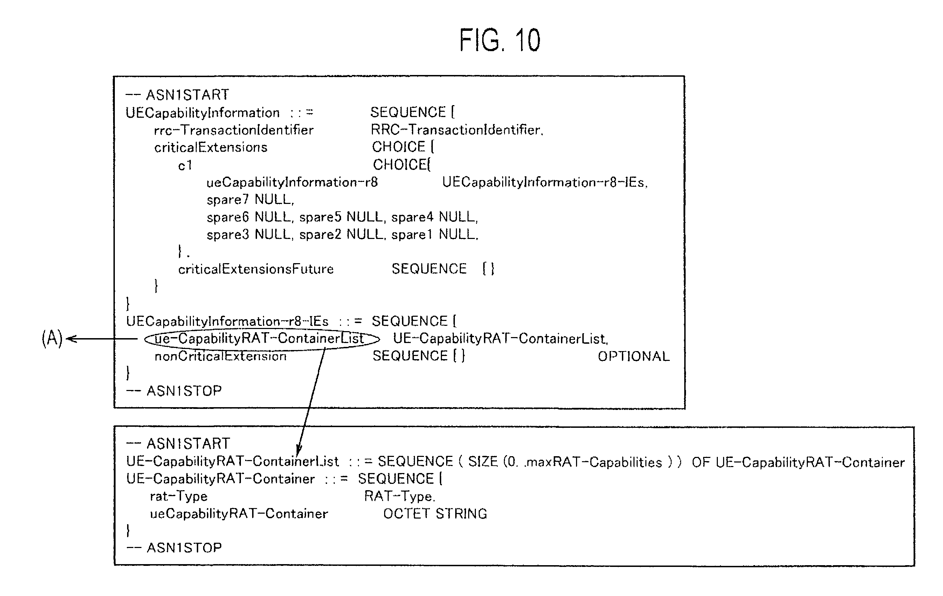

For example, as illustrated in Fig. 10, the transmission unit 24 may set an "MBSFN subframe allocation pattern (see Fig. 5)", which indicates the transmission timing of the MBSFN subframe, in a "ue-CapabilityRAT-ContainerList"(A) of an information element "UECapabilityInformation-r8" of "RRC RN (UE) Capability Information".

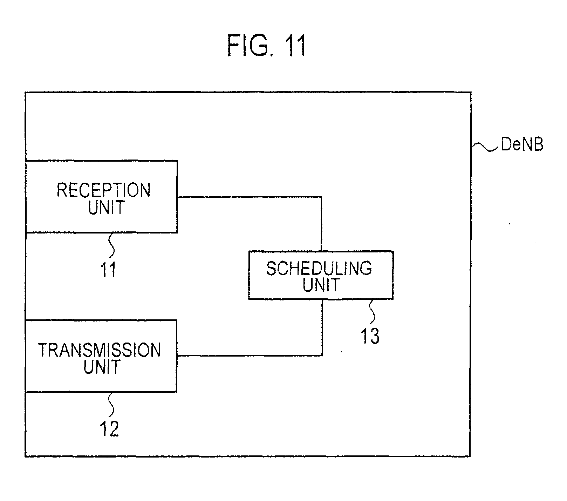

As illustrated in Fig. 11, the radio base station DeNB includes a reception unit 11, a transmission unit 12, and a scheduling unit 13.

When setting an RRC connection between the radio base station DeNB and the relay node RN, the reception unit 11 is configured to acquire the transmission timing of the MBSFN subframe from the relay node RN.

Specifically, the reception unit 11 may be configured to acquire the transmission timing of the MBSFN subframe from the "RRC RN (UE) Capability Information" transmitted in the set-up procedure of the RRC connection.

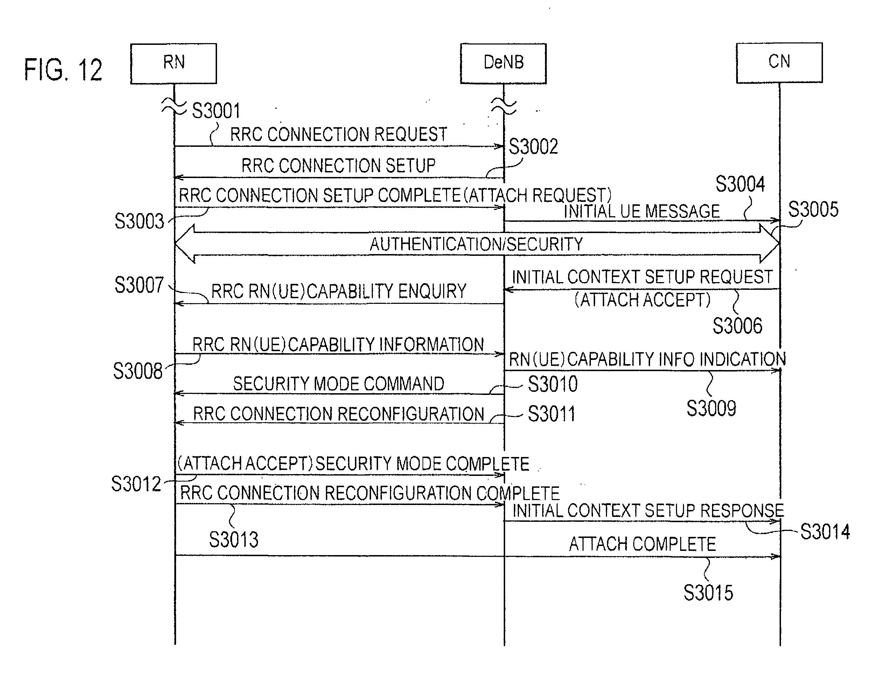

With reference to Fig. 12, the operation of the mobile communication system according to the second embodiment of the present invention will be explained below.

As illustrated in Fig. 12, operations in step S3001 through step S3015 are the same as those in step S1001 through step S1015 illustrated in Fig. 7.

However, in step S2011, the radio base station DeNB does not notify, to the relay node RN, the transmission timing of the above-mentioned MBSFN subframe by the "RRC Connection Reconfiguration".

Instead, in step S3008, the relay node RN notifies, to the relay node RN, the transmission timing of the MBSFN subframe by the "RRC RN (UE) Capability Information".

In accordance with the mobile communication system according to the second embodiment of the present invention, it is possible to reduce the occurrence of interference in the relay node RN through simple control.

### (First modification)

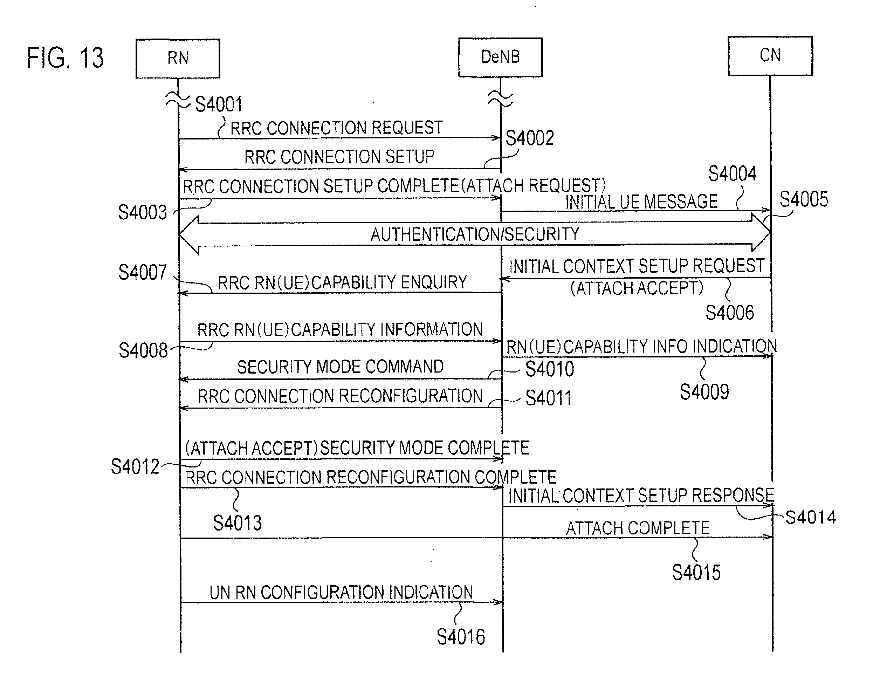

With reference to Fig. 13, the mobile communication system according to the first modification of the second embodiment of the present invention will be explained. Hereinafter, the mobile communication system according to the present first modification will be explained while focusing on the difference from the mobile communication system according to the above-mentioned second embodiment of the present invention.

In the mobile communication system according to the present first modification, the transmission unit 24 of the relay node RN may be configured to notify, to the radio base station DeNB, the transmission timing of the MBSFN subframe by a "Un RN Configuration Indication" instead of the "RRC RN (UE) Capability Information".

In addition, the "Un RN Configuration Indication" has not been defined in the existing set-up procedure of the RRC connection, and is a signal used for a procedure newly defined between the radio base station DeNB and the relay node RN.

Further, the reception unit 11 of the radio base station DeNB may be configured to acquire the transmission timing of the MBSFN subframe from the above-mentioned "Un RN Configuration Indication".

With reference to Fig. 13, the operation of the mobile communication system according to the present first modification will be explained below.

As illustrated in Fig. 13, operations in step S4001 through step S4015 are the same as those in step S3001 through step S3015 illustrated in Fig. 12. However, in step S4008, the relay node RN does not notify the radio base station DeNB of the transmission timing of the above-mentioned MBSFN subframe by the "RRC RN (UE) Capability Information".

In step S4016, the relay node RN transmits the "Un RN Configuration Indication", which notifies the configuration of a Un radio bearer as a radio relay base station between the relay node RN and the radio base station DeNB, to the radio base station DeNB.

Here, the relay node RN notifies, to the radio base station DeNB, the transmission timing of the above-mentioned MBSFN subframe by the "Un RN Configuration Indication".

The above-mentioned aspects of the embodiment may be expressed as follows:

A first aspect of the present embodiment is summarized as a mobile communication method including the steps of: (A) notifying, from a relay node RN to a radio base station DeNB, a transmission timing of the MBSFN subframe, when setting an RRC connection between the radio base station DeNB and the relay node RN; (B) scheduling, at the radio base station DeNB, to transmit a downlink signal to the relay node RN at the transmission timing of the MBSFN subframe; and (C) scheduling, at the relay node RN, to transmit a downlink signal at a timing other than the transmission timing of the MBSFN subframe.

In the first aspect of the present embodiment, in the step (A), the relay node RN can notify, to the radio base station DeNB, the transmission timing of the MBSFN subframe by "RRC RN (UE) Capability Information" transmitted in a set-up procedure of the RRC connection.

A second aspect of the present embodiment is summarized as a radio base station DeNB including: an reception unit 11 configured to acquire a transmission timing of the MBSFN subframe from a relay node EN, when setting an RRC connection between the radio base station DeNB and the relay node RN; and a scheduling unit 13 configured to schedule the radio base station DeNB to transmit a downlink signal to the relay node RN at the transmission timing of the MBSFN subframe.

In the second aspect of the present embodiment, the reception unit 11 can be configured to acquire the predetermined timing from "RRC RN (UE) Capability Information" transmitted in a set-up procedure of the RRC connection.

A third aspect of the present invention is summarized as a relay node RN including: a transmission unit 24 configured to notify, to a radio base station DeNB, a transmission timing of the MBSFN subframe, when setting an RRC connection between the relay node RN and the radio base station DeNB; and a scheduling unit 22 configured to schedule the relay node RN to transmit a downlink signal at a timing other than the transmission timing of the MBSFN subframe.

In the third aspect of the present embodiment, the transmission unit 24 can be configured to notify, to the radio base station DeNB, the transmission timing of the MBSFN subframe by "RRC RN (UE) Capability Information" in a set-up procedure of the RRC connection.

Note that operation of the above described radio base station DeNB, the relay node RN, the core node CN and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station DeNB, the relay node RN, the core node CN and the mobile station UE. Also, the storage medium and the processor may be provided in the radio base station DeNB, the relay node RN, the core node CN and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

## Claims

1. A mobile communication method comprising the steps of:
(A) notifying (S1011, S2017), from a radio base station to a relay node, a transmission timing of an MBSFN subframe, when setting a connection between the radio base station and the relay node;
(B) scheduling, at the radio base station, to transmit a downlink signal to the relay node at the transmission timing of an MBSFN subframe; and
(C) scheduling, at the relay node, to transmit a downlink signal at a timing other than the transmission timing of an MBSFN subframe.

2. The mobile communication method according to claim 1, wherein
the connection is an RRC connection; and
in the step (A), the radio base station notifies (S1011), to the relay node, the transmission timing of an MBSFN subframe by an "RRC Connection Reconfiguration" transmitted in a set-up procedure of the RRC connection.

3. A mobile communication method comprising the steps of:
(A) notifying (S3008, S4016), from a relay node to a radio base station, a transmission timing of an MBSFN subframe, when setting a connection between the radio base station and the relay node;
(B) scheduling, at the radio base station, to transmit a downlink signal to the relay node at the transmission timing of an MBSFN subframe; and
(C) scheduling, at the relay node, to transmit a downlink signal at a timing other than the transmission timing of an MBSFN subframe.

4. The mobile communication method according to claim 3, wherein
the connection is an RRC connection; and
in the step (A), the relay node notifies (S3008), to the radio base station, the transmission timing of an MBSFN subframe by "RRC RN (UE) Capability Information" transmitted in a set-up procedure of the RRC connection.

5. A radio base station comprising:
a notification unit (12) configured to notify, to a relay node, a transmission timing of an MBSFN subframe, when setting a connection between the radio base station and the relay node; and
a scheduling unit (13) configured to schedule the radio base station to transmit a downlink signal to the relay node at the transmission timing of an MBSFN subframe, wherein
the relay node does not schedule to transmit a downlink signal at the transmission timing of an MBSFN subframe.

6. The radio base station according to claim 5, wherein
the connection is an RRC connection; and
the radio base station comprises a reception unit (11) configured to receive an "RRC Connection Request" transmitted in a set-up procedure of the RRC connection, wherein
when a transmission source of the "RRC Connection Request" received in the reception unit (11) is the relay node in the set-up procedure of the RRC connection, the notification unit is configured to notify, to the relay node, the transmission timing of an MBSFN subframe by an "RRC Connection Reconfiguration".

7. A radio base station comprising:
an acquisition unit (11) configured to acquire a transmission timing of an MBSFN subframe from a relay node, when setting a connection between the radio base station and the relay node; and
a scheduling unit (13) configured to schedule the radio base station to transmit a downlink signal to the relay node at the transmission timing of an MBSFN subframe, wherein
the relay node does not schedule to transmit a downlink signal at the transmission timing of an MBSFN subframe.

8. The radio base station according to claim 7, wherein
the connection is an RRC connection; and
the acquisition unit (11) is configured to acquire the transmission timing of an MBSFN subframe from "RRC RN (UE) Capability Information" transmitted in a set-up procedure of the RRC connection.

9. A relay node comprising:
an acquisition unit (21) configured to acquire a transmission timing of an MBSFN subframe from a radio base station, when setting a connection between the relay node and the radio base station; and
a scheduling unit (22) configured to schedule to transmit a downlink signal at a timing other than the transmission timing of an MBSFN subframe, wherein
the radio base station schedules the relay node to transmit a downlink signal at the transmission timing of an MBSFN subframe.

10. The relay node according to claim 9, wherein
the connection is an RRC connection; and
the acquisition unit (21) is configured to acquire the transmission timing of an MBSFN subframe from an "RRC Connection Reconfiguration" transmitted in a set-up procedure of the RRC connection.

11. The relay node according to claim 9, comprising:
a transmission unit (24) configured to transmit an "RRC Connection Request" including information indicating being transmitted by the relay node, in the set-up procedure of the RRC connection.

12. A relay node comprising:
a notification unit (24) configured to notify, to a radio base station, a transmission timing of an MBSFN subframe, when setting a connection between the relay node and the radio base station; and
a scheduling unit (22) configured to schedule to transmit a downlink signal at a timing other than the transmission timing of an MBSFN subframe, wherein
the radio base station schedules the relay node to transmit a downlink signal at the transmission timing of an MBSFN subframe.

13. The relay node according to claim 12, wherein
the connection is an RRC connection; and
the notification unit (24) is configured to notify, to the radio base station, the transmission timing of an MBSFN subframe by "RRC RN (UE) Capability Information" in a set-up procedure of the RRC connection.

## Patentansprüche

1. Mobilkommunikationsverfahren, umfassend die Schritte:
(A) Benachrichtigen (S1011, S2017), von einer Funkbasisstation zu einem Weiterleitungsknoten, eines Übertragungstimings eins MBSFN-Unterrahmens, beim Herstellen einer Verbindung zwischen der Funkbasisstation und dem Weiterleitungsknoten;
(B) Planen, an der Funkbasisstation, ein Downlinksignal an den Weiterleitungsknoten zu dem Übertragungstiming eines MBSFN-Unterrahmens zu übertragen;
(C) Planen, an dem Weiterleitungsknoten, ein Downlinksignal zu einem anderen Timing als das des Übertragungstimings eines MBSFN-Unterrahmens zu übertragen.

2. Mobilkommunikationsverfahren nach Anspruch 1, wobei
die Verbindung eine RRC-Verbindung ist; und
in dem Schritt (A), die Funkbasisstation an den Weiterleitungsknoten das Übertragungstiming eines MBSFN-Unterrahmens mittels einer "RRC-Verbindungs-Neukonfiguration", übertragen in einer Herstellungsprozedur einer RRC-Verbindung, benachrichtigt (S1011).

3. Mobilkommunikationsverfahren, umfassend die Schritte:
(A) Benachrichtigen (S3008, S4016), von einem Weiterleitungsknoten an eine Funkbasisstation, eines Übertragungstimings eines MBSFN-Unterrahmens, beim Herstellen einer Verbindung zwischen der Funkbasisstation und dem Weiterleitungsknoten;
(B) Planen, an der Funkbasisstation, ein Downlinksignal an den Weiterleitungsknoten zu dem Übertragungstiming eines MBSFN-Unterrahmens zu übertragen; und
(C) Planen, an dem Weiterleitungsknoten, ein Downlinksignal zu einem anderen Timing als das des Übertragungstimings eines MBSFN-Unterrahmens zu übertragen.

4. Mobilkommunikationsverfahren nach Anspruch 3, wobei
die Verbindung eine RRC-Verbindung ist; und
in dem Schritt (A), der Weiterleitungskonten an die Funkbasisstation das Übertragungstiming eines MBSFN-Unterrahmens durch "RRC-RN-(UE)-Fähigkeitsinformation", übertragen in einer Herstellungsprozedur der RRC-Verbindung, benachrichtigt (S3008).

5. Funkbasisstation umfassend:
eine Benachrichtigungseinheit (12), die konfiguriert ist zum Benachrichtigen, an einen Weiterleitungsknoten, eines Übertragungstimings eines MBSFN-Unterrahmens, beim Herstellen einer Verbindung zwischen der Funkbasisstation und dem Weiterleitungsknoten; und
eine Planungseinheit (13), die konfiguriert ist zum Planen, dass die Funkbasisstation ein Downlinksignal an den Weiterleitungsknoten zu dem Übertragungstiming eines MBSFN-Unterrahmens überträgt, wobei
der Weiterleitungsknoten nicht plant ein Downlinksignal zu dem Übertragungstiming eines MBSFN-Unterrahmens zu übertragen.

6. Funkbasisstation nach Anspruch 5, wobei
die Verbindung eine RRC-Verbindung ist; und
die Funkbasisstation eine Empfangseinheit (11) umfasst, die konfiguriert ist zum Empfangen einer "RRC-Verbindungs-Anfrage", die in einer Herstellungsprozedur der RRC-Verbindung übertragen wird, wobei
wenn eine Übertragungsquelle der "RRC-Verbindungs-Anfrage", empfangen in der Empfangseinheit (11), der Weiterleitungsknoten in der Herstellungsprozedur der RRC-Verbindung ist, die Benachrichtigungseinheit konfiguriert ist zum Benachrichtigen, an den Weiterleitungsknoten, des Übertragungstimings eines MBSFN-Unterrahmens mittels einer "RRC-Verbindung-Neukonfiguration".

7. Funkbasisstation umfassend:
eine Erlangungseinheit (11), die konfiguriert ist zum Erlangen eines Übertragungstimings eines MBSFN-Unterrahmens von einem Weiterleitungsknoten, beim Herstellen einer Verbindung zwischen der Funkbasisstation und dem Weiterleitungsknoten; und
eine Planungseinheit (13), die konfiguriert ist zum Planen, dass die Funkbasisstation ein Downlinksignal an den Weiterleitungsknoten zu einem Übertragungstiming eines MBSFN-Unterrahmens überträgt, wobei
der Weiterleitungsknoten nicht plant ein Downlinksignal zu dem Übertragungstiming eines MBSFN-Unterrahmens zu übertragen.

8. Funkbasisstation nach Anspruch 7, wobei
die Verbindung eine RRC-Verbindung ist; und
eine Erlangungseinheit (11) konfiguriert ist zum Erlangen des Übertragungstimings eines MBSFN-Unterrahmens aus "RRC-RN-(UE)-Fähigkeitsinformation", übertragen in einer Herstellungsprozedur der RRC-Verbindung.

9. Weiterleitungsknoten umfassend:
eine Erlangungseinheit (21), die konfiguriert ist zum Erlangen eines Übertragungstimings eines MBSFN-Unterrahmens von einer Funkbasisstation, beim Herstellen einer Verbindung zwischen dem Weiterleitungsknoten und der Funkbasisstation; und
eine Planungseinheit (22), die konfiguriert ist zum Planen ein Downlinksignal zu einem Timing zu übertragen, das verschieden ist von dem Übertragungstiming eines MBSFN-Unterrahmens, wobei
die Funkbasisstation den Weiterleitungsknoten plant zu dem Übertragungstiming eines MBSFN-Unterrahmens ein Downlinksignal zu übertragen.

10. Weiterleitungsknoten nach Anspruch 9, wobei
die Verbindung eine RRC-Verbindung ist; und
die Erlangungseinheit (21) konfiguriert ist zum Erlangen des Übertragungstimings eines MBSFN-Unterrahmens von einer "RRC-Verbindungs-Neukonfiguration", übertragen in einer Herstellungsprozedur einer RRC-Verbindung.

11. Weiterleitungsknoten nach Anspruch 9, umfassend:
eine Übertragungseinheit (24), die konfiguriert ist zum Übertragen einer "RRC-Verbindungs-Anfrage", welche Information beinhaltet, die die Übertragung durch den Weiterleitungsknoten anzeigt, in der Herstellungsprozedur der RRC-Verbindung.

12. Weiterleitungsknoten umfassend:
eine Benachrichtigungseinheit (24), die konfiguriert ist zum Benachrichtigen, an die Funkbasisstation, eines Übertragungstimings eines MBSFN-Unterrahmens, beim Herstellen einer Verbindung zwischen dem Weiterleitungsknoten und der Funkbasisstation; und
eine Planungseinheit (22), die konfiguriert ist zum Planen ein Übertragungssignal zu einem Timing zu übertragen, das verschieden ist von dem Übertragungstiming eines MBSFN-Unterrahmens, wobei
die Funkbasisstation den Weiterleitungsknoten plant ein Downlinksignal zu dem Übertragungstiming eines MBSFN-Unterrahmens zu übertragen.

13. Weiterleitungsknoten nach Anspruch 12, wobei
die Verbindung eine RRC-Verbindung ist; und
die Benachrichtigungseinheit (24) konfiguriert ist zum Benachrichtigen, an die Funkbasisstation, des Übertragungstimings eines MBFSN-Unterrahmens durch "RRC-RN-(UE)-Fähigkeitsinformation" in einer Herstellungsprozedur der RRC-Verbindung.

## Revendications

1. Procédé de communication mobile comprenant les étapes de :
(A) notification (S1011, S2017), depuis une station radio de base à destination d'un noeud relais, d'une synchronisation de transmission d'une sous-trame MBSFN, en établissant une connexion entre la station radio de base et le noeud relais ;
(B) planification, au niveau de la station radio de base, pour transmettre un signal de liaison descendante au noeud relais à la synchronisation de transmission d'une sous-trame MBSFN ; et
(C) planification, au niveau du noeud relais, pour transmettre un signal de liaison descendante à une synchronisation autre que la synchronisation de transmission d'une sous-trame MBSFN.

2. Procédé de communication mobile selon la revendication 1, dans lequel
la connexion est une connexion RRC ; et
dans l'étape (A), la station radio de base notifie (S1011), au noeud relais, la synchronisation de transmission d'une sous-trame MBSFN par une « Reconfiguration de Connexion RRC » transmise dans une procédure d'établissement de la connexion RRC.

3. Procédé de communication mobile comprenant les étapes de :
(A) notification (S3008, S4016), depuis un noeud relais à destination d'une station radio de base, d'une synchronisation de transmission d'une sous-trame MBSFN, en établissant une connexion entre la station radio de base et le noeud relais ;
(B) planification, au niveau de la station radio de base, pour transmettre un signal de liaison descendante au noeud relais à la synchronisation de transmission d'une sous-trame MBSFN ; et
(C) planification, au niveau du noeud relais, pour transmettre un signal de liaison descendante à une synchronisation autre que la synchronisation de transmission d'une sous-trame MBSFN.

4. Procédé de communication mobile selon la revendication 3, dans lequel
la connexion est une connexion RRC ; et
dans l'étape (A), le noeud relais notifie (S3008), à la station radio de base, la synchronisation de transmission d'une sous-trame MBSFN par une « Information de Capacité RRC RN (UE) » transmise dans une procédure d'établissement de la connexion RRC.

5. Station radio de base comprenant :
une unité de notification (12) configurée pour notifier, à un noeud relais, une synchronisation de transmission d'une sous-trame MBSFN, en établissant une connexion entre la station radio de base et le noeud relais ; et
une unité de planification (13) configurée pour planifier la station radio de base pour transmettre un signal de liaison descendante au noeud relais à la synchronisation de transmission d'une sous-trame MBSFN, dans laquelle
le noeud relais n'effectue pas de planification pour transmettre un signal de liaison descendante à la synchronisation de transmission d'une sous-trame MBSFN.

6. Station radio de base selon la revendication 5, dans laquelle
la connexion est une connexion RRC ; et
la station radio de base comprend une unité de réception (11) configurée pour recevoir une « Demande de Connexion RRC » transmise dans une procédure d'établissement de la connexion RRC, dans laquelle
quand une source de transmission de la « Demande de Connexion RRC » reçue dans l'unité de réception (11) est le noeud relais dans la procédure d'établissement de la connexion RRC, l'unité de notification est configurée pour notifier, au noeud relais, la synchronisation de transmission d'une sous-trame MBSFN par une « Reconfiguration de Connexion RRC ».

7. Station radio de base comprenant :
une unité d'acquisition (11) configurée pour acquérir une synchronisation de transmission d'une sous-trame MBSFN d'un noeud relais, en établissant une connexion entre la station radio de base et le noeud relais ; et
une unité de planification (13) configurée pour planifier la station radio de base pour transmettre un signal de liaison descendante au noeud relais à la synchronisation de transmission d'une sous-trame MBSFN, dans laquelle
le noeud relais n'effectue pas de planification pour transmettre un signal de liaison descendante à la synchronisation de transmission d'une sous-trame MBSFN.

8. Station radio de base selon la revendication 7, dans laquelle
la connexion est une connexion RRC ; et
l'unité d'acquisition (11) est configurée pour acquérir la synchronisation de transmission d'une sous-trame MBSFN à partir d'une « Information de Capacité RRC RN (UE) » transmise dans une procédure d'établissement de la connexion RRC.

9. Noeud relais comprenant :
une unité d'acquisition (21) configurée pour acquérir une synchronisation de transmission d'une sous-trame MBSFN en provenance d'une station radio de base, en établissant une connexion entre le noeud relais et la station radio de base ; et
une unité de planification (22) configurée pour planifier pour transmettre un signal de liaison descendante à une synchronisation autre que la synchronisation de transmission d'une sous-trame MBSFN, dans lequel
la station radio de base planifie le noeud relais pour transmettre un signal de liaison descendante à la synchronisation de transmission d'une sous-trame MBSFN.

10. Noeud relais selon la revendication 9, dans lequel
la connexion est une connexion RRC ; et
l'unité d'acquisition (21) est configurée pour acquérir la synchronisation de transmission d'une sous-trame MBSFN à partir d'une «Reconfiguration de Connexion RRC » transmise dans une procédure d'établissement de la connexion RRC.

11. Noeud relais selon la revendication 9, comprenant :
une unité de transmission (24) configurée pour transmettre une « Demande de Connexion RRC » incluant une information indiquant une transmission en cours par le noeud relais, dans la procédure d'établissement de la connexion RRC.

12. Noeud relais comprenant :
une unité de notification (24) configurée pour notifier, à une station radio de base, une synchronisation de transmission d'une sous-trame MBSFN, en établissant une connexion entre le noeud relais et la station radio de base ; et
une unité de planification (22) configurée pour planifier pour transmettre un signal de liaison descendante à une synchronisation autre que la synchronisation de transmission d'une sous-trame MBSFN, dans lequel
la station radio de base planifie le noeud relais pour transmettre un signal de liaison descendante à la synchronisation de transmission d'une sous-trame MBSFN.

13. Noeud relais selon la revendication 12, dans lequel
la connexion est une connexion RRC ; et
l'unité de notification (24) est configurée pour notifier, à la station radio de base, la synchronisation de transmission d'une sous-trame MBSFN par une « Information de Capacité RRC RN (UE) » dans une procédure d'établissement de la connexion RRC.
